# EUROPÄISCHE PATENTSCHRIFT

(11) **EP 1 336 944 B1**
(45) Veröffentlichungstag und Bekanntmachung des Hinweises auf die Patenterteilung: **18.07.2007**
(21) Anmeldenummer: 03002289.1
(22) Anmeldetag: 03.02.2003
(51) Int. Cl.: G08B 13/193, G02B 5/09

(54) **Spiegeloptik für einen Bewegungsmelder**
Mirror optics for a motion sensor
Miroir optique pour un détecteur de mouvement

(30) Priorität: 14.02.2002 DE 20202336 U
(43) Veröffentlichungstag der Anmeldung: 20.08.2003
(73) Patentinhaber: Steinel GmbH & Co. KG, 33442 Herzebrock (DE)
(72) Erfinder: Meggle, Martin, Dipl.-Phys., 33442 Herzebrock-Clarholz (DE); Steinel, Wolfgang, 86825 Bad Wörishofen (DE)
(74) Vertreter: Behrmann, Niels

(56) Entgegenhaltungen:
- EP-A- 0 014 825
- EP-A- 0 623 905
- WO-A-95/10056
- DE-A- 3 732 230
- US-A- 5 924 789
- PATENT ABSTRACTS OF JAPAN vol. 001, no. 158 (M-052), 15. Dezember 1977 (1977-12-15) -& JP 52 103728 A (OHBAYASHIGUMI LTD), 31. August 1977 (1977-08-31)
- PATENT ABSTRACTS OF JAPAN vol. 005, no. 182 (P-090), 20. November 1981 (1981-11-20) -& JP 56 109303 A (HONMA KAZUKO;OTHERS: 01), 29. August 1981 (1981-08-29)

## Beschreibung

Die vorliegende Erfindung betrifft einen Bewegungsmelder nach dem Oberbegriff des Anspruchs 1 sowie eine einen Bewegungsmelder aufweisende Leuchteneinheit.

Aus dem Stand der Technik existieren zahlreiche Ansätze, um zum Zweck der Bewegungserfassung Infrarotstrahlung von sich bewegenden Objekten zu erfassen und auf ein geeignetes infrarotsensitives Detektorelement zu fokussieren; Änderungen des so abgebildeten Infrarotmusters werden dann durch eine nachgeschaltete Verstärker- und Auswerteelektronik zum Zweck der Bewegungserfassung ausgewertet. Die typischen Anwendungsfälle derartiger Passiv-Infrarotsysteme (PIR) sind integrierte Bewegungssensorleuchten, oder aber Alarm- und Überwachungssysteme, bei welchen Sensoren der gattungsgemäßen Art an geeigneten Stellen zu Überwachungszwecken positioniert sind und im Rahmen geeigneter Alarminfrastrukturen bei Bewegungserfassung Alarmsignale auslösen.

Eine Herausforderung derartiger, bekannter Systeme besteht darin, einen möglichst weiten Erfassungsbereich (üblicherweise in der horizontalen Ebene, d.h. parallel zum Erdboden) zu realisieren, wobei insbesondere Erfassungswinkel bis zur Größenordnung von 180° angestrebt werden. Durch klassische Vorgehensweisen und ohne in den Bewegungsmelder integrierte (Umlenk-)Spiegel lässt sich ein solch großer Erfassungsbereich jedoch nur mit mehreren Sensoreinheiten bzw. unter Inkaufnahme weiterer (hier nicht zu diskutierender) technischer Probleme erreichen. Es existieren daher zahlreiche Ansätze, den gewünschten weiten Erfassungsbereich mit Hilfe eines Spiegelsystems zu erweitern bzw. überhaupt erst zu ermöglichen.

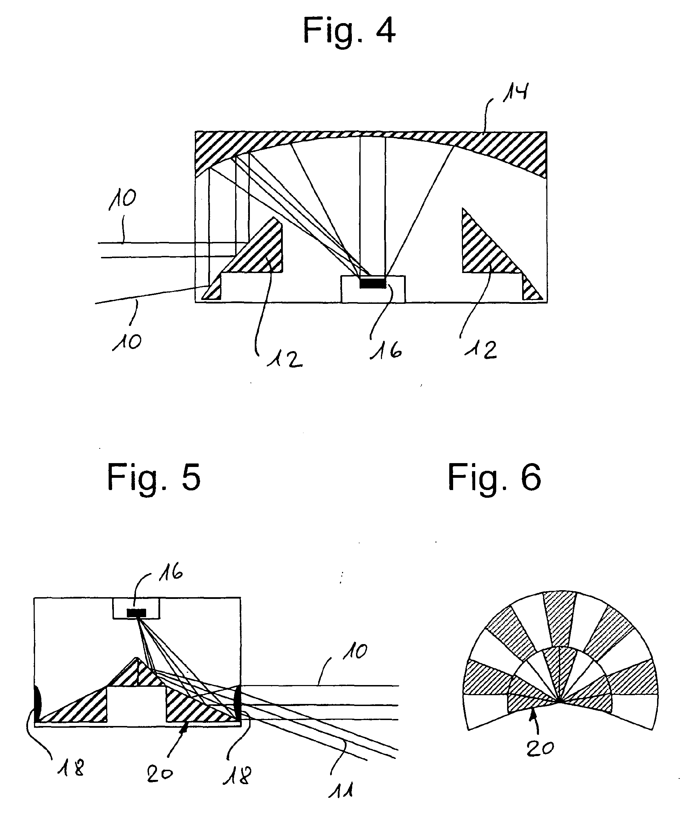

Die Fig. 4 verdeutlicht einen ersten Ansatz, der zudem ohne Linsensegmente auskommt: Einfallende (IR-)Strahlung 10 wird mittels einer ersten rotationssymmetrischen Spiegelanordnung 12 auf einen Parabolspiegel 14 gelenkt, welcher wiederum die Strahlung auf ein mittig vorgesehenes, auf die Mitte des Parabolspiegels ausgerichtetes infrarotsensitives Sensorelement 16 richtet. Je nach Konfiguration wird mit der Anordnung gemäß Fig. 4 ein sehr weitgehender Erfassungswinkel, bis zu 360°, realisiert, wobei ein wesentliches Element der Parabolspiegel 14 ist. Problematisch bei dieser Technologie ist jedoch die optische Komplexität und der hohe konstruktive und Bauelementeaufwand, nicht zuletzt bedingt durch den aufwendig herzustellenden und zu justierenden Parabolspiegel 14.

Ein weiterer, aus dem Stand der Technik bekannter und zur Gattungsbildung herangezogener Ansatz wird mit den Fig. 5 und 6 verdeutlicht: Wie eine vertikale Schnittansicht analog Fig. 4 durch diese Anordnung zeigt, wird hier einfallende Strahlung 10 durch Linsensegmente 18 einer die schematisch in Fig. 5 gezeigte Einheit begrenzenden Linsenreihe erfasst, auf ein mehrteiliges (d.h. mehrsegmentiges) Spiegelsystem 20 projiziert und dadurch auf das Sensorelement 16 gelenkt. Die Draufsicht auf das Spiegelsystem 20 in Fig. 6 verdeutlicht einzelne Segmente der gezeigten mehrstufigen Anordnung, so dass, vergleiche die zusätzliche einfallende Strahlung 11 in Fig. 5, mit Hilfe der einen vorhandenen Linsenreihe praktisch zwei Erfassungsebenen realisiert werden können (d.h. sowohl die Strahlung 10 als auch die Strahlung 11 wird durch ein einzelnes Linsensegment 18 auf verschiedene Abschnitte des Spiegelsystems 20 projiziert und dann gemeinsam zum Sensorelement 16 umgelenkt).

Während insbesondere die in Fig. 5 bzw. Fig. 6 gezeigte Anordnung besonders günstig ist, um unter Minimierung der Linsenfläche einen maximalen Erfassungsbereich sicherzustellen, so bedingt jedoch insbesondere das komplexe Spiegelsystem 20 eine sehr aufwendige Herstellung, Kalibrierung und Empfindlichkeit gegenüber Beschädigungen, so dass etwa eine preisgünstige Großserienfertigung der Vorrichtung gemäß Fig. 5, Fig. 6 problematisch ist.

Als weitergehende, bekannte Lösungen aus dem Stand der Technik und zum Erreichen eines gewünschten Blickwinkels von ca. 180° ist es zudem möglich, Spezialsensoren einzusetzen, die etwa mehrere Eintrittsfenster besitzen, wodurch sich wiederum dann die Optik vereinfachen würde; entsprechend aufwendig und teuer ist dann jedoch die Beschaffung dieser Spezialsensoren.

Aus der EP 0 623 905 B1 ist ein Bewegungsmelder nach dem Oberbegriff des Hauptanspruchs bekannt, wobei insbesondere auch eine Spiegelvorrichtung aus mehreren planen, facettenförmigen Flächenbereichen beschrieben ist. Eine derartige, bekannte Spiegelvorrichtung ist jedoch herstellungstechnisch aufwendig zu realisieren.

Aufgabe der vorliegenden Erfindung ist es daher, einen Bewegungsmelder dahingehend zu verbessern, dass eine darin vorgesehene Spiegelvorrichtung einfacher herzustellen und zu kalibrieren sowie weniger empfindlich gegen Beschädigungen oder Verschmutzungen ist, ohne dass zum Erreichen eines gewünschten, möglichst großen Blickwinkels Spezialsensoren, etwa Sensoren mit mehreren Eintrittsfenstern, notwendig sind.

Die Aufgabe wird durch die Vorrichtung mit den Merkmalen des Hauptanspruchs gelöst; vorteilhafte Weiterbildungen der Erfindung sind in den Unteransprüchen beschrieben.

In erfindungsgemäß vorteilhafter Weise sorgt die aus aneinanderstoßenden planenFlächenbereichen bestehende, pyramidenförmige Spiegelvorrichtung dafür, dass nicht nur einfallende Strahlung aus einem großen Erfassungswinkel (Blickwinkel) auf einen einzelnen, lediglich ein Eintrittsfenster aufweisenden (damit standardisierten) Sensor fokussiert werden kann, so dass das Erfordernis eines Blickwinkels von mehr als 160°, bevorzugt sogar mehr als 170°, realisierbar ist, auch ermöglicht es der einfache Aufbau der im montierten Zustand (mit einer Öffnung) pyramidenförmigen Spiegelvorrichtung (nachfolgend auch : Spiegelelement) als einstückiges, durch einen Kant- bzw. Faltvorgang geformtes und ursprünglich planes Werkstück, dieses mit geringstem herstellungstechnischen Aufwand und damit großserientauglich herzustellen.

Weiterbildungsgemäß ist es besonders bevorzugt, dieses Spiegelelement mit Hilfe eines vernickelten Messingblechs oder vergleichbarem Trägermaterial herzustellen, wobei im Grundzustand ein kreisbogenförmiges Element ausgestanzt und dann entlang radial verlaufender, bevorzugt gleichmäßig angeordneter Segmentlinien gefaltet wird, so dass die gewünschte (ein offenes Ende besitzende, d.h. üblicherweise nicht allseitig geschlossene) Pyramidenform entsteht. Je nach Anzahl der Segmente und Ausgestaltung dieser Bogenform lässt sich hypothetisch auch ein Erfassungsbereich realisieren, der deutlich größer als 180° ist und sich an 360° annähern kann.

Da zudem plane Segmente (Facetten) der Spiegeleinheit verwendet werden, beeinflusst die Spiegeleinheit nicht etwa eine Systembrennweite der Vorrichtung, so dass der optische sowie der Einstellungsaufwand entsprechend minimiert sind; darüber hinaus können als fokussierende Elemente für die Linseneinheit Standardlinsen oder Fresnelllinsen verwendet werden.

Gemäß einer bevorzugten Weiterbildung der vorliegenden Erfindung, die die Vorteile dieser einfachen Konstruktion besonders zur Geltung kommen lässt, fokussieren mehrere Linsensegmente der Linseneinheit einfallende Strahlung auf dieselbe Spiegelfacette, welche wiederum dann diese verschiedenen Strahlungsbündel gemeinsam auf die Detektoreinheit bündelt. Auf diese Weise wird jede Spiegelfacette für mehrere Erfassungssegmente (der Linseneinheit) genutzt, so dass in sehr eleganter Weise eine umfassende Abdeckung des Erfassungsbereichs erreicht werden kann.

Während einerseits die Verwendung der erfindungsgemäßen Spiegeloptik innerhalb eines Bewegungsmelders für isolierte Bewegungsmelderanwendungen, z.B. innerhalb eines Alarmsystems mit entsprechend geeignet angeordneten Bewegungsmeldergehäusen an zu überwachenden Stellen, eingesetzt werden kann, so liegt ein besonders bevorzugtes Einsatzgebiet der vorliegenden Erfindung zusammen mit sogenannten Sensorleuchten, nämlich (PIR-)bewegungssensorgesteuerten Leuchteneinheiten, welche sich gerade im Außenbereich von Gebäuden besonderer Beliebtheit erfreuen, indem ein unter Verwendung der erfindungsgemäßen Spiegeloptik realisierter Bewegungsmelder unmittelbar in oder an ein entsprechendes Leuchtengehäuse, welches das zu steuernde Leuchtmittel enthält, integriert ist.

Im Ergebnis entsteht durch die vorliegende Erfindung die Möglichkeit, einen weiten Erfassungsbereich für PIR-Bewegungsmelder mit einfachstem optischem und herstellungstechnisch günstigem Aufbau zu kombinieren, so dass davon auszugehen ist, dass mit der vorliegenden Technologie Weitbereichserfassung für Bewegungsmelder zunehmende Verbreitung erfahren wird.

Weitere Vorteile, Merkmale und Einzelheiten ergeben sich aus der nachfolgenden Beschreibung bevorzugter Ausführungsbeispiele sowie anhand der Zeichnungen; diese zeigen in
- Fig 1:: eine schematische Seitenansicht eines (aufgeschnitten dargestellten) Bewegungsmeldergehäuse mit Spiegeloptik, Linsensystem und Sensoreinheit;
- Fig 2:: eine Draufsicht auf das Spiegelelement im abgewickelten (entfalteten) Zustand als planes Stanzteil;
- Fig 3:: ein Längsschnitt durch die Anordnung gemäß Fig. 1;
- Fig 4:: eine schematische seitliche Schnittansicht einer ersten bekannten Spiegeloptiktechnologie aus dem Stand der Technik und
- Fig 5,Fig. 6:: weitere Ansichten einer gattungsbildenden, bekannten Spiegeloptiktechnologie.

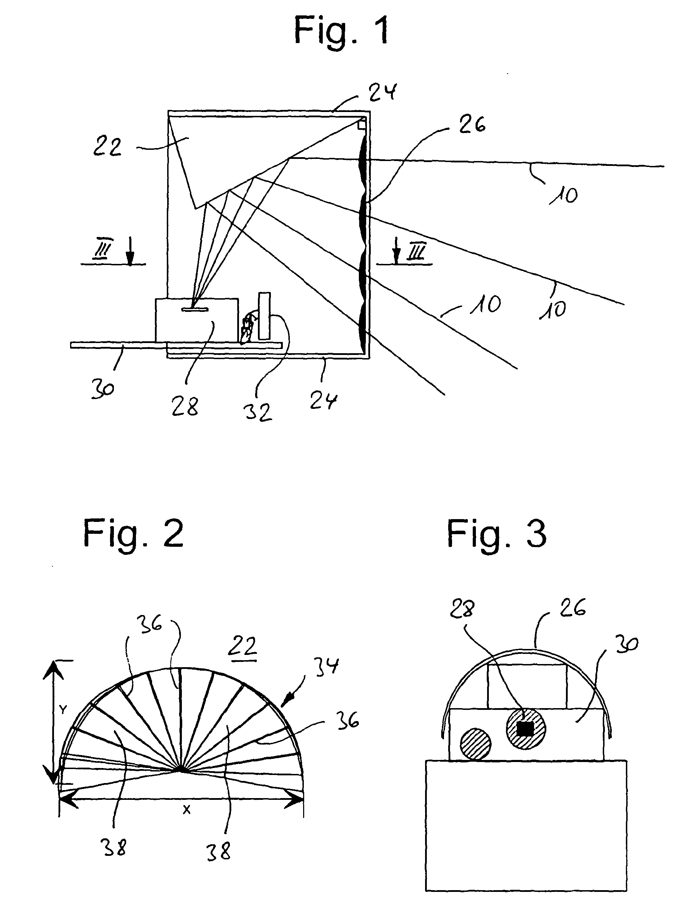

Ein pyramidenartiges Spiegelelement 22 ist, wie in der Seitenansicht der Fig. 1 gezeigt, im Deckenbereich eines Bewegungssensorgehäuses 24 vorgesehen und leitet durch ein mehrreihiges Linsensystem 26 einfallende Strahlung 10 um auf eine PIR-Detektoreinheit 28, wie sie als typisches Standardelement handelsüblich ist (z.B. Perkin Elmer LHI 878). Genauer gesagt liegt im Gehäuse 24 das Spiegelelement 22 der auf einer Leiterplatte 30 montierten Detektoreinheit 28 gegenüber, wobei, wie insbesondere aus der Seitenansicht der Fig. 1 erkennbar ist, platzsparend auf der Leiterplatte 30 weitere (schematisch gezeigte) elektronische Bauelemente 32 in Richtung auf das Linsensystem 26 montiert sein können, ohne den Strahlengang bzw. die optischen Eigenschaften nachteilig zu beeinflussen.

Wie die Draufsicht auf die Detektoreinheit 28 in Fig. 3 (Schnittlinie III-III in Fig. 1) verdeutlicht, ist das Linsensystem 26 eine halbkreisförmig gebogene Optik mit einzelnen Linsensegmenten, die, vergleiche Fig. 1, im gezeigten Ausführungsbeispiel in vier Reihen übereinander angeordnet sind; die Detektoranordnung 28 sitzt sowohl im Zentrum dieses gebogenen Linsensystems, als auch unterhalb der Pyramidenspitze des Spiegelelements 22 (vergleiche Fig. 1).

Die Fig. 2 verdeutlicht, wie das Spiegelelement 22 auf einfachste Weise als Stanzteil aus einem planen Metallblech (hier Messingblech, welches für die Verspiegelung vernikkelt ist), hergestellt werden kann. Genauer gesagt wird aus einem Blechwerkstoff in der gezeigten Weise ein kreisausschnittsförmiges Blechstück 34 ausgestanzt, welcheszweidimensional, verdeutlicht durch die X-Y Koordinateneine sich etwas über 180° erstreckende Kreisbogenkontur aufweist. Strahlenförmig geben zudem sich radial erstrekkende Faltlinien 36 die einzelnen Segmente 38 an. Gefaltet entlang dieser Faltlinien 36 entsteht dann die in Fig. 1 in der Seitenansicht gezeigte, nach hinten offene pyramidenförmige Anordnung (wobei in der Fig. 1 aus Gründen der Übersichtlichkeit auf das Andeuten der einzelnen Segmente verzichtet wurde).

Die vorliegende Erfindung ist nicht auf das beschriebene Ausführungsbeispiel beschränkt, so ist es insbesondere möglich und denkbar, das Spiegelelement (-blech) so auszugestalten, dass damit ein Blickwinkel (Erfassungsbereich) auch von mehr als 180° erreichbar ist; dies würde, in der Darstellung der Fig. 2 durch entsprechende Ergänzung von Segmenten erfolgen.

Auch ist, wie in der Fig. 1 gezeigt, die vorliegende Erfindung nicht auf die gezeigte, mehrreihige Linsenanordnung beschränkt, jedoch ist es im Rahmen der vorliegenden Erfindung besonders bevorzugt, eine derartige Mehrreihigkeit zu verwenden, damit jede einzelne Spiegelfacette (d.h. jedes einzelne Spiegelelement 38) für mehrere Erfassungsbereiche genutzt werden kann.

## Patentansprüche

1. Bewegungsmelder, insbesondere Passiv-Infrarot- (PIR-) Bewegungsmelder, mit einer zum Fokussieren von durch eine Linseneinheit (26) eintretender Infrarotstrahlung (10) auf eine Detektoreinheit (28) ausgebildeten Spiegelvorrichtung (22), wobei die Spiegelvorrichtung als einstückig aus einem planen Spiegelmaterial (34) realisiertes, eine Mehrzahl von in einem vorbestimmten Winkel entlang eines Kreisbogens zueinander stehenden planen, facettenförmigen Flächenbereichen (38) aufweisendes und pyramidenartiges Spiegelelement ausgebildet ist,
das so relativ zur Linseneinheit und zur Detektoreinheit in einem Bewegungsmeldergehäuse (24) so positioniert ist, dass in mindestens einer Erfassungsebene ein Erfassungswinkel von > 160°, insbesondere > 170°, realisiert ist,
**dadurch gekennzeichnet, dass** das Spiegelelement als gestanztes und danach gefaltetes Blechteil (34) realisiert ist.

2. Bewegungsmelder nach Anspruch 1, **dadurch gekennzeichnet, dass** das Blechteil oberflächenbeschichtetes,insbesondere vernickeltes oder verchromtes Messing-, Aluminium- oder Stahlblech ist.

3. Bewegungsmelder nach Anspruch 1 oder 2, **dadurch gekennzeichnet, dass** das Spiegelelement in einem ungefalteten und/oder abgewickelten Zustand eine Kreisausschnittsform beschreibt oder durch eine kreisausschnittsförmige Umfangslinie definierbar ist, wobei Faltlinien (36) zum Begrenzen der planen, facettenartigen Flächenbereiche (38) radial im Kreisausschnitt verlaufen.

4. Bewegungsmelder nach Anspruch 3, **dadurch gekennzeichnet, dass** ein Kreisbogen des Kreisausschnitts > 180° ist.

5. Bewegungsmelder nach einem der Ansprüche 1 - 4, **dadurch gekennzeichnet, dass** die Linseneinheit eine Mehrzahl von Linsenelementen aufweist, die so ausgebildet sind, dass mehrere der Linsenelemente Strahlung auf einen planen Flächenbereich fokussieren.

6. Bewegungsmelder nach einem der Ansprüche 1 - 5, **dadurch gekennzeichnet, dass** die Detektoreinheit (28) auf einer Leiterplatte (30) zusammen mit elektronischen Bauelementen (32) zum Realisieren einer Verstärker- und/oder Auswerteelektronik für ein Detektorsignal im Bewegungsmeldergehäuse (24) montiert ist, wobei die Bauelemente im Bewegungsmeldergehäuse zwischen der Linseneinheit und der Detektoreinheit angeordnet sind.

7. Bewegungsmelder nach Anspruch 6, **dadurch gekennzeichnet, dass** die Spiegelvorrichtung, bezogen auf die Leiterplatte, oberhalb der Detektoreinheit und mittig zu dieser im Bewegungsmeldergehäuse angeordnet ist.

8. Bewegungsgesteuerte Leuchteneinheit, insbesondere Sensorleuchte für Innen- und Außenanwendungen, mit einem zum Aufnehmen eines Leuchtmittels ausgebildeten Leuchtengehäuse sowie einem am oder im Leuchtengehäuse vorgesehenen Passiv-Infrarot- (PIR-) Bewegungsmelder, **dadurch gekennzeichnet, dass** eine zum Zweck der Bewegungssteuerung erfasste Infrarotstrahlung mittels der Spiegelvorrichtung nach einem der Ansprüche 1 - 7 auf eine PIR-Detektoreinheit des Bewegungsmelders gelenkt wird.

## Claims

1. Motion sensor, in particular passive infrared (PIR) motion sensor, having a mirror device (22) designed for focusing infrared radiation (10), which enters through a lens unit (26), on a detector unit (28), wherein the mirror device is designed as a pyramid-like mirror element realised in one piece from a flat mirror material (34) and having a plurality of flat, facet-like surface regions (38) spaced from one another at a predetermined angle along an arc of a circle, which pyramid-like mirror element is positioned relative to the lens unit and to the detector unit in a motion sensor housing (24) so that in at least one plane of detection, a detection angle of > 160°, in particular > 170°, is realised, **characterised in that** the mirror element is realised as a stamped and then folded sheet metal part (34).

2. Motion sensor according to claim 1, **characterised in that** the sheet metal part is surface-coated, in particular nickel-plated or chrome-plated brass, aluminium or steel sheet.

3. Motion sensor according to claim 1 or 2, **characterised in that** the mirror element describes a sector of a circle shape in an unfolded and/or unwound state or can be defined by a peripheral line like a sector of a circle, wherein fold lines (36) for limiting the flat, facet-like surface regions (38) run radially in the sector of a circle.

4. Motion sensor according to claim 3, **characterised in that** an arc of a circle of the sector of a circle is > 180°.

5. Motion sensor according to one of claims 1- 4, **characterised in that** the lens unit has a plurality of lens elements, which are designed so that several of the lens elements focus radiation on a flat surface region.

6. Motion sensor according to one of claims 1-5, **characterised in that** the detector unit (28) is mounted on a printed circuit board (30) together with electronic components (32) for realising amplifying and/or evaluating electronics for a detector signal in the motion sensor housing (24), wherein the components in the motion sensor housing are arranged between the lens unit and the detector unit.

7. Motion sensor according to claim 6, **characterised in that** the mirror device, relative to the printed circuit board, is arranged above the detector unit and centrally to the latter in the motion sensor housing.

8. Motion-controlled light unit, in particular sensor light for internal and external applications, having a light housing designed to accommodate a lighting means and a passive infrared (PIR) motion sensor provided on or in the light housing, **characterised in that** infrared radiation detected for the purpose of motion control is directed onto a PIR detector unit of the motion sensor by means of the mirror device according to one of claims 1-7.

## Revendications

1. Détecteur de mouvement, en particulier détecteur de mouvement infrarouge passif (PIR), comprenant un dispositif de miroir (22) réalisé pour la focalisation de rayonnement infrarouge (10) entrant par une unité de lentilles (26) sur une unité de détection (28), le dispositif de miroir se présentant sous la forme d'élément de miroir réalisé d'une seule pièce à base d'un matériau de miroir (34) plan, présentant une pluralité de zones de surface (38) en forme de facettes, planes et disposées le long d'un arc de cercle en formant un angle prédéfini les unes par rapport aux autres et en forme de pyramide, qui est positionné par rapport à l'unité de lentilles et à l'unité de détection dans un boîtier de détecteur de mouvement (24) de telle sorte qu'un angle de captage supérieur à 160°, en particulier supérieur à 170°, est réalisé dans au moins un plan de captage, **caractérisé en ce que** l'élément de miroir est réalisé comme une partie en tôle (34) matricée et pliée ensuite.

2. Détecteur de mouvement selon la revendication 1, **caractérisé en ce que** la partie en tôle est une tôle de laiton, d'aluminium ou d'acier revêtue en surface, en particulier galvanisée ou chromée.

3. Détecteur de mouvement selon la revendication 1 ou 2, **caractérisé en ce que** l'élément de miroir décrit une forme de secteur circulaire dans un état non plié et/ou déroulé ou peut être défini par une ligne périphérique en forme de secteur circulaire, des lignes de pliage (36) s'étendant radialement dans le secteur circulaire pour délimiter les zones de surfaces (38) planes et de type facettes.

4. Détecteur de mouvement selon la revendication 3, **caractérisé en ce qu'**un arc de cercle du secteur circulaire est supérieur à 180°.

5. Détecteur de mouvement selon l'une quelconque des revendications 1 à 4, **caractérisé en ce que** l'unité de lentilles présente une pluralité d'éléments de lentille qui sont conçus de telle sorte que plusieurs des éléments de lentille focalisent un rayonnement sur une zone de surface plane.

6. Détecteur de mouvement selon l'une quelconque des revendications 1 à 5, **caractérisé en ce que** l'unité de détection (28) est montée sur une carte à circuits imprimés en même temps que des composants (32) électroniques pour réaliser une électronique d'amplificateur et/ou d'analyse pour un signal de détection dans le boîtier de détecteur de mouvement (24), les composants étant disposés dans le boîtier du détecteur de mouvement entre l'unité de lentilles et l'unité de détection.

7. Détecteur de mouvement selon la revendication 6, **caractérisé en ce que** le dispositif de miroir est disposé, par rapport à la carte à circuits imprimés, au-dessus de l'unité de détection et au centre par rapport à celle-ci dans le boîtier du détecteur de mouvement.

8. Unité d'éclairage commandée par mouvement, en particulier lampe de capteur pour applications intérieures et extérieures, comprenant un boîtier de lampe réalisé pour recevoir un moyen d'éclairage et un détecteur de mouvement infrarouge passif (PIR) prévu sur ou dans le boîtier de lampe, **caractérisé en ce qu'**un rayonnement infrarouge enregistré pour la commande de mouvement est guidé au moyen du dispositif de miroir selon l'une quelconque des revendications 1 à 7 sur une unité de détection PRI du détecteur de mouvement.
